**Europäisches Patentamt**

**European Patent Office**

**Office européen des brevets**

(19)

(11) **EP 0 957 339 A2**

(12) **EUROPÄISCHE PATENTANMELDUNG**

(43) Veröffentlichungstag:
**17.11.1999  Patentblatt 1999/46**

(51) Int. Cl.⁶: **G01C 9/00**, B60T 8/00

(21) Anmeldenummer: **99108895.6**

(22) Anmeldetag: **05.05.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **15.05.1998 DE 19821617**

(71) Anmelder: **DaimlerChrysler AG
70567 Stuttgart (DE)**

(72) Erfinder:
• **Gesele, Frank
85053 Ingolstadt (DE)**
• **Maier, Holger
71409 Schwaikheim (DE)**

(74) Vertreter: **Kolb, Georg et al
DaimlerChrysler AG,
Postfach 35 35
74025 Heilbronn (DE)**

(54) **Verfahren und Vorrichtung zur Messung des Neigungswinkels in seitlich geneigten Kurven**

(57)    Bei bisherigen fahrdynamischen Stabilitätsregelungen werden zur Erfassung des Neigungswinkels einer seitlich geneigten Kurve zusätzliche Sensoren benötigt. Das neue Verfahren bzw. Vorrichtung soll es ermöglichen, den Neigungswinkel mit bereits vorhandenen Sensoren zu erfassen.

Bei diesem Verfahren bzw. dieser Vorrichtung wird aus der Drehrate, der Querbeschleunigung und der Fahrzeuggeschwindigkeit der Neigungswinkel der Kurve berechnet.

Dieses Verfahren bzw. die Vorrichtung eignet sich für fahrdynamische Stabilitätsregelungen, die ohne zusätzliche Sensoren den Neigungswinkel einer seitlich geneigten Kurve messen und diesen in ihre Berechnungen mit einbeziehen.

FIG.3

EP 0 957 339 A2

**Beschreibung**

Die Erfindung **betrifft** ein Verfahren und eine Vorrichtung zur Messung des Neigungswinkels in seitlich geneigten Kurven.

Bei der Bestimmung oder Beurteilung einer Fahrsituation im Rahmen einer fahrdynamischen Stabilitätsregelung, wie beispielsweise beim ESP (**E**lektronisches **S**tabilitäts-**P**rogramm), ergeben sich beim Durchfahren einer seitlich geneigten Kurve, die sich durch eine Querneigung gegenüber der Horizontalen auszeichnet, Fehler in der Bewertung des Fahrzeugzustandes. Eine Ursache hierfür liegt darin, daß Parameter, die den jeweiligen Fahrzeugzustand charakterisieren, zusätzlich durch die Gravitation oder Zentrifugalkräfte beeinflußt werden. Eine seitlich geneigte Kurve kann im Extremfall ohne Lenkradbetätigung durchfahren werden. Von einer fahrdynamischen Stabilitätsregelung wird das Fehlen des Lenkradausschlages bemerkt jedoch eine Drehrate bezüglich der Z-Achse und eine Querbeschleunigung bezüglich der Y-Achse erfaßt. Dies führt dazu, daß die fahrdynamische Stabilitätsregelung aktiviert wird und falsche Eingriffe in die Fahrdynamik initiiert. Des weiteren können Fehlauslösungen von Kraftfahrzeugsicherheitssystemen auftreten. Aus diesem Grund muß beispielsweise im Extremfall das ESP beim Durchfahren einer seitlich geneigten Kurve vom Fahrer abgeschaltet werden.

In der DE 43 25 413 C2 wird ein Verfahren zur Bestimmung von Parametern, die den Fahrzustand des Kraftfahrzeugs charakterisieren, wie Drehrate, Querbeschleunigung, Lenkwinkel, Geschwindigkeit, Beschleunigung, Raddrehzahlen usw., offenbart. Hier wird für eine exakte Berechnung des Fahrzeugzustandes der Neigungswinkel als Zustandsgröße benötigt.

**Nachteilig** hierbei ist jedoch, daß kein Hinweis darauf gegeben wird, wie ein Neigungswinkel qualitativ oder quantitativ erfaßt wird.

Es sind verschiedene Verfahren bekannt, um die Fahrzeugneigung bzw. die Fahrbahnneigung gegenüber der Horizontalen zu erfassen.

In der EP 0 769 701 A1 wird eine Vorrichtung für ein Fahrzeug offenbart, die zwei Beschleunigungssensoren beinhaltet. Diese beiden Beschleunigungssensoren sind in einem definierten Winkel zur Horizontalebene angeordnet. Ohne Fahrzeugneigung zeigen die Beschleunigungssensoren dieselbe Abweichung von der tatsächlich vorliegenden Fahrzeugquerbeschleunigung an, entsprechend ihrer Fahrzeugneigung läßt sich mit Hilfe einer Differenz- und Summenbildung der beiden Sensorsignale die Fahrzeugneigung und hieraus die tatsächliche Fahrzeugbeschleunigung berechnen.

**Nachteilig** hierbei ist jedoch, daß mehrere Beschleunigungssensoren benötigt werden und daß diese Beschleunigungssensoren nur dazu dienen, eine Querneigung des Kraftfahrzeuges zu erkennen. Diese Lösung erweist sich als sehr kostenintensiv. Auch wird hierfür zusätzlich Platz benötigt. Ein weiterer Nachteil besteht darin, daß die beiden identischen, aber unterschiedlich eingebauten Meßsysteme nicht zuverlässig in jeder Fahrsituation den richtigen Neigungswinkel der Fahrbahn erkennen, beim Schleudern oder bei Fahrbahnunebenheiten fälschlicherweise einen Neigungswinkel anzeigen.

Ein anderes Verfahren zur Bestimmung der Fahrbahnneigung in Längsrichtung wird in der DE 44 43 522 A1 offenbart. Hier wird zumindest einmal ein frei rollender Zustand, zumindest einer angetriebenen Achse des Fahrzeuges erkannt. In diesem Zustand rollen auch die Räder der angetriebenen Achsen schlupffrei. Im Sinne des Abgleichs der Raddrehzahlen zwischen den angetriebenen Achsen wird die Differenzdrehzahl einer nicht angetriebenen Achse ermittelt. Gleichzeitig wird der Wert der Abbremsung, also der Fahrzeugverzögerung gemessen. Aus den ermittelten Werten der Differenzdrehzahl und der Abbremsungen wird der Wert einer Neigungskonstanten ermittelt. Mit der Neigungskonstanten kann aus den ermittelten Werten der Differenzdrehzahl und Abbremsung die Fahrbahnneigung bestimmt werden.

**Nachteilig** hierbei ist jedoch, daß nur die Neigung der Fahrbahn in Längsrichtung gemessen werden kann und für eine Messung ein frei rollender Zustand herbeigeführt werden muß, um überhaupt eine Fahrbahnneigung zu erkennen.

Der Erfindung liegt daher die **Aufgabe** zugrunde, ein Verfahren anzugeben, das diese Nachteile behebt und die Genauigkeit und die Zuverlässigkeit derartiger Systeme erhöht.

Diese Aufgabe wird erfindungsgemäß durch die Merkmale des Patentanspruches 1 **gelöst**. Hierbei wird in einem fahrenden Kraftfahrzeug zeitgleich die Querbeschleunigung, die Drehrate und die Fahrzeuggeschwindigkeit gemessen und durch eine Verknüpfung dieser drei gemessenen Faktoren der Neigungswinkel in Echtzeit berechnet.

Die mit der Erfindung erzielten **Vorteile** sind die Zuverlässigkeit dieser Neigungsmessung, die einfache Realisierung und die geringen Kosten, da beispielsweise in den meisten Fahrzeugen sowieso zusätzlich zu einem Geschwindigkeitsmesser ein Drehratensensor und ein Querbeschleunigungssensor eingebaut sind. Derartige Sensoren werden unter anderem bereits für Airbag-Auslösegeräte und fahrdynamische Regelungen benötigt. Dadurch kann ohne zusätzlichen Material- und Kostenaufwand der Neigungwinkel der Fahrbahn ermittelt werden und für elektronische Kraftfahrzeugeinrichtungen, insbesondere fahrdynamische Stabilitätsregelungen oder Kraftfahrzeugsicherheitssyteme zur Weiterberechnung zur Verfügung gestellt werden.

**Vorteilhafte Weiterbildungen** ergeben sich aus den Unteransprüchen. Hierbei kann der ermittelte Neigungswinkel $\alpha$ für Korrekturberechnungen in fahrdynamischen Stabilitätsregelungen zur Verfügung gestellt werden, so daß derartige Systeme auch in Kurven mit geneigter Fahrbahn zuverlässig arbeiten. Des weiteren erweist sich ein Zähler bei einem solchen Verfahren als besonders vorteilhaft. Mit ihm wird die relative Dauer einer Kurvenfahrt auf geneigter Fahrbahn erfaßt. Damit werden kurzzeitige Fahrzustände, die zufällig dem Durchfahren einer Kurve mit geneigter Fahrbahn ähneln, erkannt und können von einer tatsächlichen Kurvenfahrt auf geneigter Fahrbahn unterschieden werden.

Im folgenden soll die Erfindung anhand von Ausführungsbeispielen beschrieben werden.

Es zeigen:

**Figur 1:** Fahrzeug mit Vorrichtungen zur Messung des Neigungswinkels der seiltlich geneigten Fahrbahn in einer Kurve.

**Figur 2:** Ablaufdiagramm zur Erkennung von seitlich geneigten Kurven und der Messung des Neigungswinkels.

**Figur 3:** Drehrate, welche vom Drehratensensor bei einem Fahrzeug in einer Kurve mit geneigter Fahrbahn erfaßt wird.

**Figur 4:** Querbeschleunigung, welche von einem Beschleunigungssensor bei einem Fahrzeug in einer Kurve mit geneigter Fahrbahn erfaßt wird.

**Figur 5:** Ablaufdiagramm für ein Verfahren mit integriertem Zähler und Korrektur der Drehrate.

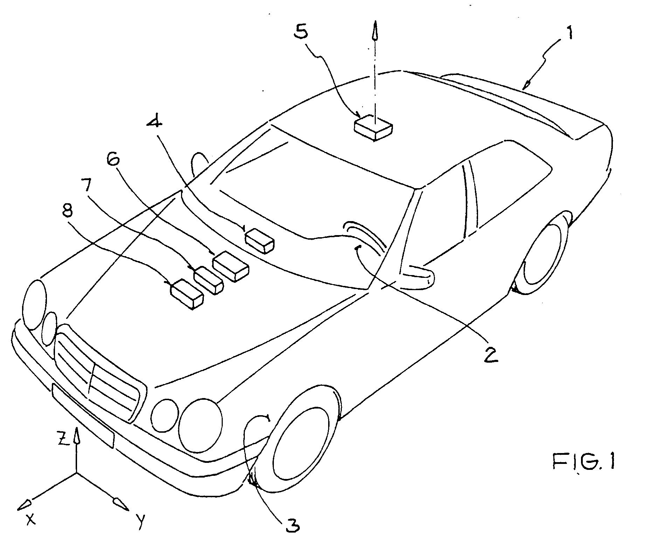

**Figur 1** zeigt ein Kraftfahrzeug **1**, welches alle Vorrichtungen enthält, um eine seitlich geneigte Kurve zu erkennen und deren Neigungswinkel zu messen. In diesem Kraftfahrzeug befindet sich ein Lenkwinkelsensor **2**, der den Lenkwinkel $\delta$, also die Stellung der Räder aufgrund eines Lenkausschlages ermittelt. Gleichfalls befindet sich ein Geschwindigkeitssensor **3** im Kraftfahrzeug **1**, welcher über die Anzahl der Radumdrehungen, die Geschwindigkeit **v** erfaßt. Ein Querbeschleunigungssensor **4** mißt die Querbeschleunigung $a_M$, welche senkrecht zur Geschwindigkeit **v** und parallel zur Fahrzeugebene steht. Der gleichfalls am Fahrzeug **1** befestigte Drehratensensor **5** mißt die Drehrate $\dot{\Psi}_D$, die senkrecht zur Geschwindigkeit **v** und senkrecht zur Fahrzeugebene steht. Die mittels der verschiedenen Sensoren erhaltenen Daten werden in eine Auswerteeinheit **6** eingelesen, in der berechnet wird, ob eine seitlich geneigte Kurve durchfahren wird oder nicht und in der gleichfalls der Neigungswinkel $\alpha$ berechnet wird. Dies muß in Echtzeit erfolgen, da der momentane Fahrzustand von Interesse ist. Die Informationen, ob eine seitlich geneigte Kurve durchfahren wird oder nicht, und die Größe des Neigungswinkels bewirken, daß ein Wert in einem Zähler **7** erhöht oder erniedrigt wird. Liegt der Wert des Zählers innerhalb eines definierten Bereichs, so wird die Information, ob eine seitlich geneigte Kurve vorliegt, an einen Verbraucher **8**, insbesondere eine fahrdynamische Stabilitätsregelung oder ein Kraftfahrzeugsicherheitssystem, weitergeleitet, der dann die entsprechenden Maßnahmen ergreift. Gleichzeitig werden mit dem ermittelten Neigungswinkel $\alpha$ Korrekturberechnung bezüglich des exakten Fahrzustandes erfolgen.

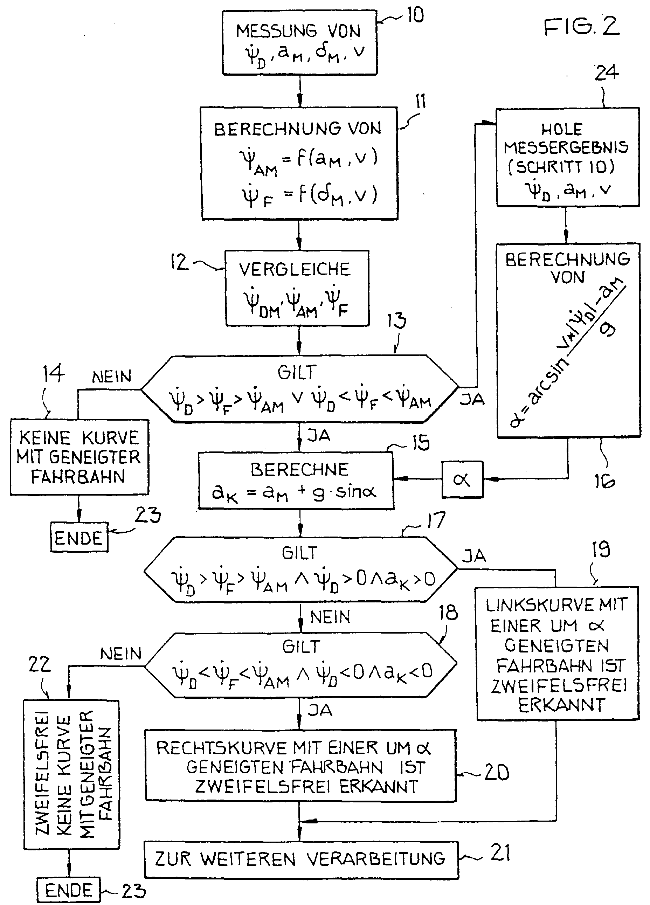

**Figur 2** zeigt ein Ablaufdiagramm zur Erkennung von seitlich geneigten Kurven und Messung des Neigungswinkels $\alpha$. Im ersten Schritt **10** erfolgt die Messung der Drehrate $\dot{\Psi}_D$, der Querbeschleunigung $a_M$, des Lenkwinkeis $\delta_M$ und der Geschwindigkeit v.

Im Schritt **11** werden die weitere Drehraten:

$$\dot{\Psi}_{AM} = f(a_M, v) = \frac{a_M}{v} \ bzw. \ \dot{\Psi}_F = f(\delta_M, v) \ berechnet.$$

Im Schritt **12** erfolgt ein Größenvergleich, der auf unterschiedliche Art und Weise erhaltenen Drehraten. Ist die Bedingung:

$$\dot{\Psi}_D > \dot{\Psi}_F > \dot{\Psi}_{AM} \ oder \ \dot{\Psi}_D < \dot{\Psi}_F < \dot{\Psi}_{AM}$$

nicht erfüllt, so wird im Schritt **14** zweifelsfrei erkannt, daß keine Kurve mit geneigter Fahrbahn vorliegt. Dadurch wird im Schritt **23** das Ermittlungsverfahren beendet. Ist jedoch eine der Bedingungen aus Schritt **12** erfüllt, so werden in Schritt **24** die Meßergebnisse $\dot{\Psi}_D$, $a_M$ und v von Schritt **10** geholt. Darauf erfolgt in Schritt **16** die Berechnung von $\alpha$ mit:

$$\alpha = \arcsin \frac{v * |\dot{\Psi}_D| - a_M}{g}.$$

Dieser Neigungswinkel wird dann für die Berechnung einer um die Erdbeschleunigung korrigierten Querbeschleunigung im Schritt **15** hinzugezogen. Bis zu diesem Punkt kann nicht 100% sichergestellt werden, daß das Fahrzeug tatsächlich eine Kurve mit geneigter Fahrbahn durchfährt. Aus diesem Grund müssen weitere Wertbetrachtungen, wie sie in Schritt **17** und **18** dargestellt sind, erfolgen. Ist wie in Schritt **17** dargestellt, die Bedingung: $\dot{\Psi}_D > \dot{\Psi}_F > \dot{\Psi}_{AM} \wedge \dot{\Psi}_D > 0 \wedge a_K > 0$ erfüllt, so wird in Schritt **19** zweifelsfrei eine Linkskurve mit geneigter Fahrbahn erkannt. Der mittels einer Meßvorrichtung bestimmte Neigungswinkel $\alpha$ wird, wie in Schritt **16** dargestellt, damit verifiziert. Alle Daten werden freigegeben und können dann in Schritt **21** für die Weiterverarbeitung in anderen Systemen, insbesondere einer fahrdynamischen Stabilitätsregelung oder einem Kraftfahrzeugsicherheitssystem verwendet werden. Gilt die Bedingung nicht, so wird in Schritt **18** die Bedingung; $\dot{\Psi}_D < \dot{\Psi}_F < \dot{\Psi}_{AM} \wedge \dot{\Psi}_D < 0 \wedge a_K < 0$ überprüft. Ist diese erfüllt, so wird in Schritt **20** zweifelsfrei eine Rechtskurve mit geneigter Fahrbahn erkannt. Die Daten werden dann in Schritt **21** für die Weiterverarbeitung in anderen Systemen, insbesondere einer fahrdynamischen Stabilitätsregelung oder einem Kraftfahrzeugsicherheitssystem zur Verfügung gestellt. Der berechnete Neigungwinkel $\alpha$ wird für weitere Berechnungen zur Verfügung gestellt. Ist jedoch die Bedingung in Schritt **18** nicht erfüllt, so wird in Schritt **22** zweifelsfrei erkannt, daß keine Kurve mit geneigter Fahrbahn vorliegt. Darauf werden in Schritt **23** weitere Berechnungen beendet. Bei Korrekturberechnungen bezüglich des Fahrzustandes wird der in Schritt **16** ermittelte Neigungswinkel $\alpha$ nicht berücksichtigt.

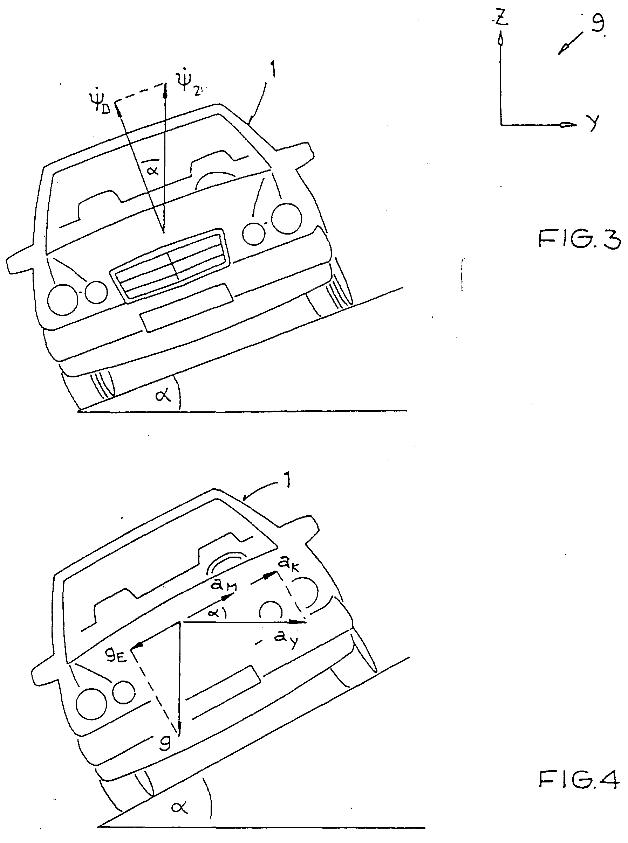

**Figur 3** zeigt ein Fahrzeug **1** beim Durchfahren einer um den Winkel $\alpha$ seitlich geneigten Kurve. Im Kraftfahrzeug befindet sich ein Drehratensensor. In dieser Abbildung werden die Drehraten dargestellt. Die vom Drehratensensor gemessene Drehrate ist $\dot{\Psi}_D$. Diese gemessene Drehrate $\dot{\Psi}_D$ ist jedoch nur ein Teil der tatsächlichen Drehrate $\dot{\Psi}_Z$, welche bezüglich der z-Achse ausgerichtet ist. Diese Achse bildet den Bezug bei einer Kurvenfahrt auf einer ebenen, nicht geneigten Fahrbahn. Die verschiedenen Hauptachsen in y- und z-Richtung sind im gleichfalls abgebildeten Koordinatensystem **9** dargestellt. Die Fahrbahn ist in der Kurve um den Winkel $\alpha$ gegenüber der y-Achse geneigt. Die Drehrate $\dot{\Psi}_D$, welche vom Drehratensensor gemessen wird, steht senkrecht zur geneigten Fahrbahnebene.

Es gilt:

$$\frac{|\dot{\Psi}_D|}{|\dot{\Psi}_z|} = \cos\alpha$$

**Figur 4** zeigt das gleiche Fahrzeug **1** beim Durchfahren einer um den Winkel $\alpha$ seitlich geneigten Kurve. In dieser Abbildung werden die Querbeschleunigungen dargestellt. Die Fahrbahn ist in der Kurve um den Winkel $\alpha$ gegenüber der Horizontalen, der y-Achse geneigt. Die verschiedenen Hauptachsen in y- und z-Richtung sind im gleichfalls abgebildeten Koordinatensystem **9** dargestellt. Im Kraftfahrzeug befindet sich ein Querbeschleunigungssensor. Die vom Querbeschleunigungssensor gemessene Querbeschleunigung ist $a_M$. Diese gemessene Querbeschleunigung $a_M$ enthält jedoch, wie in der Abbildung dargestellt, auch einen Anteil $g_E$, welcher von der Erdbeschleunigung $g$ verursacht wird. Aus diesem Grund muß die gemessene Querbeschleunigung um den durch die Gravitation verursachten Faktor korrigiert werden. Für die korrigierte Querbeschleunigung $a_K$ ergibt sich folgender Wert:

$$a_K = a_M + g^*\sin\alpha \ .$$

Auch dieser korrigierte Wert ist nur ein Bruchteil der in y-Achse ausgerichteten Querbeschleunigung $a_Y$. Für den dargestellten Fall gilt dann:

$$|a_K| = |a_Y|^*\cos\alpha$$

Des weiteren ist bekannt, daß bei einer Kurvenfahrt, sofern das Fahrzeug nicht zusätzlich seitlich ausbricht, aus der Drehrate die Querbeschleunigung berechnet werden kann:

$$a_Y = v^*\dot{\Psi}_Z$$

Grundvoraussetzung für diese Berechnung ist es, daß die Geschwindigkeit $v$ in Fahrtrichtung bekannt ist. Diese wird von einem Geschwindigkeitssensor gemessen.

Zusammen mit Figur 3 ergibt sich daraus folgende Beziehung:

$$\frac{a_K}{\cos\alpha} = \frac{a_M + g^*\sin\alpha}{\cos\alpha} = v^* \frac{\dot{\Psi}_D}{\cos\alpha}$$

Mit Hilfe dieser Beziehung kann der Neigungswinkel $\alpha$ berechnet werden:

$$\sin\alpha = \frac{v^*|\dot{\Psi}_D|\text{-}a_M}{g}.$$

und damit:

$$\alpha = \arcsin\frac{v^*|\dot{\Psi}_D|\text{-}a_M}{g}.$$

Der Neigungswinkel $\alpha$ der Fahrbahn ist somit bestimmt und steht für weitere Berechnungen zur Verfügung.

Um die Sicherheit eines solchen Systems weiter zu erhöhen, wird durch ein weiteres Verfahren, wie gleichfalls in Figur 2 beschrieben, vorab bestimmt, ob überhaupt eine Kurvenfahrt mit seitlich geneigter Fahrbahn gegeben ist, oder ob ein zufälliger, kurzzeitiger anderer Fahrzeugzustand, insbesondere Schleudern, Rutschen bzw. Kippen zugrundeliegt.

Zur Unterscheidung zwischen kurzzeitigen, zufälligen und langfristigen Zuständen kann ein solches System, welches im wesentlichen aus einem Drehratensensor, Querbeschleunigungssensor, Geschwindigkeitssensor und einer Auswerteeinheit besteht, zusätzlich einen Zähler beinhalten. Zu Beginn steht der Zähler **7** beispielsweise auf 0. Übersteigt der gemessene Neigungswinkel $\alpha$ einen festgelegten Wert, dann wird dieser Zähler **7** beispielsweise um den Wert 1 erhöht. Diese Messung wird beispielsweise alle 7ms wiederholt. Überschreitet dann der Zähler **7** beispielsweise den Wert 25, so ist die Kurve mit geneigter Fahrbahn erkannt und der ermittelte Neigungswinkel $\alpha$ wird einer fahrdynamischen Stabilitätsregelung für weitere Berechnungen zur Verfügung gestellt. Bleiben die Bedingungen für diesen Zustand weiterhin erhalten, so wird der Zähler beispielsweise maximal bis zum Wert 40 hochgezählt. Sind dagegen die Bedingungen nicht mehr erfüllt, so wird der Zähler dekrementiert. Beim Unterschreiten des Wertes 25 wird dann keine geneigte Fahrbahn mehr erkannt. Der Zähler wird solange herabgezählt, bis beispielsweise der Wert 0 wieder erreicht ist. Dadurch läßt sich ein zufälliger kurzzeitiger Zustand von einem länger andauernden Zustand, wie er tatsächlich beim Durchfahren einer Kurve mit geneigter Fahrbahn gegeben ist, unterscheiden.

Wie bereits erwähnt, können Kurven mit geneigter Fahrbahn beispielsweise ohne einen Lenkausschlag durchfahren werden. Ein fahrdynamisches Stabilisierungsprogramm wird dann einen Fehler erkennen, weil es eine Querbeschleunigung in y-Richtung und eine Drehrate in z-Richtung mißt. Ist jedoch der Neigungswinkel der Fahrbahn bekannt bzw. ausgemessen, so können die gemessenen Werte für weitere Berechnungen verwendet werden. Bei einem Verfahren wird aus der gemessenen Querbeschleunigung eine erste Drehrate $\dot{\Psi}_Q$ und dem gemessenen Lenkwinkel $\delta_M$ eine zweite Drehrate $\dot{\Psi}_F$ wie in Figur 2, Schritt 11 dargestellt, berechnet und korrigiert und dann mit einer dritten direkt von einem Drehratensensor gemessenen Drehrate $\dot{\Psi}_D$ verglichen. Stimmen die Werte annähernd überein, so kann beispielsweise ein Schleudervorgang ausgeschlossen werden.

Hierbei ist die erste, vom Fahrzeugmodell abhängige Drehrate $\dot{\Psi}_F$ eine Funktion von Fahrzeuggeschwindigkeit $v$ und Lenkwinkel $\delta_M$. Bei einer geneigten Fahrbahn in der Kurve ist der vom Fahrzeugmodell abhängige Wert mit einem Fehler behaftet und muß korrigiert werden. Hierbei ist der Neigungswinkel $\alpha$ direkt proportional zu diesem Fehler. Der Proportionalitätsfaktor wird durch Versuchsreihen bestimmt und hat einen Wert von ca. 0,27. Für die erste korrigierte Drehrate $\dot{\Psi}_{FK}$ ergibt sich:

$$\dot{\Psi}_{FK} = \dot{\Psi}_F + 0{,}27^*\alpha$$

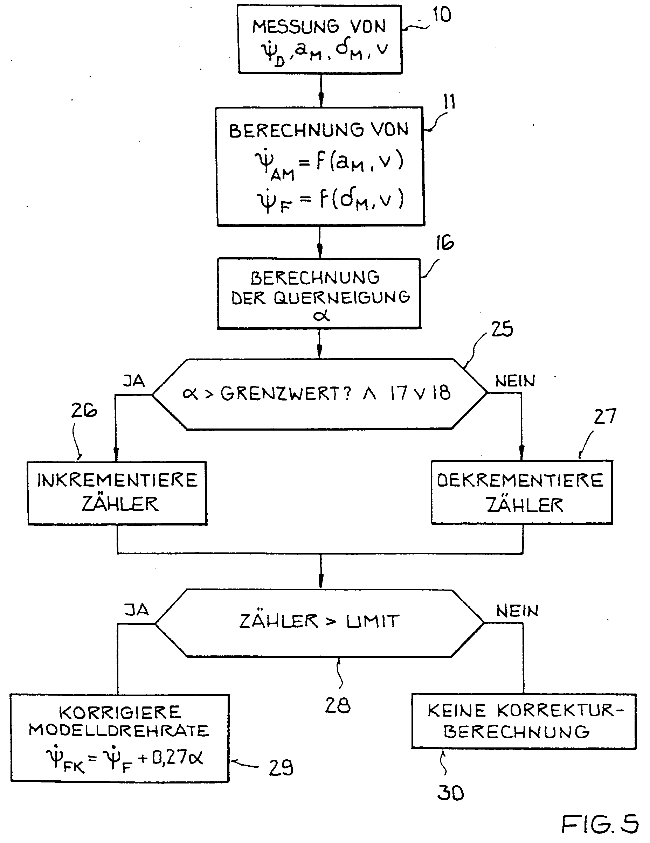

**Figur 5** zeigt ein Ablaufdiagramm für ein solches Verfahren mit integriertem Zähler und Korrektur der Drehrate $\Psi_F$

Im ersten Schritt **10** erfolgt die Messung der Drehrate $\dot{\Psi}_D$, der Querbeschleunigung $a_M$, des Lenkwinkels $\delta_M$ und der Geschwindigkeit v. Im Schrift **11** werden die weitere Drehraten:

$$\dot{\Psi}_{AM} = f(a_M,v) = \frac{a_M}{v} \text{ bzw. } \dot{\Psi}_F = f(\delta_M,v) \text{ berechnet.}$$

Dann wird im Schritt **16** der Neigungswinkel $\alpha$ berechnet mit

$$\alpha = \arcsin\frac{v^*|\dot{\Psi}_D|\text{-}a_M}{g}.$$

Im Schritt **25** wird der ermittelte Neigungswinkel mit einem festgelegten Grenzwert verglichen und überprüft, ob für die unterschiedlichen Drehraten eine der folgenden Bedingungen, wie sie im Schritt 17 bzw. 18 in Figur 2 beschrieben werden, erfüllt werden. Im Schritt **25** heißt:

$$17: \Psi_D > \Psi_F > \Psi_{AM} \wedge \dot{\Psi}_D > 0 \wedge a_K > 0 \qquad \vee$$
$$18: \Psi_D < \Psi_F < \Psi_{AM} \wedge \dot{\Psi}_D < 0 \wedge a_K < 0$$

Sind die Bedingungen erfüllt, wird der Zähler in Schritt **26** hochgezählt. Ist die Bedingung nicht erfüllt, so wird der Zähler in Schritt **27** heruntergezählt. Nach dem Hoch- bzw. Hinunterzählen des Zählers wird der Zählerstand im Schritt **28** mit einem festgelegten Limitwert verglichen. Ist der Zählerstand kleiner wie der Limitwert, so wird in Schritt **30** keine Korrekturberechnung vorgenommen, weil dann keine Kurve mit seitlich geneigter Fahrbahn durchfahren wird. Ist jedoch der Zählerstand größer, wie das festgelegte Minimum, so wird ein Durchfahren einer Kurve mit seitlich geneigter Fahrbahn erkannt und in Schritt **29** wird eine Korrekturberechnung hinsichtlich der aus dem Lenkwinkel und der Geschwindigkeit ermittelten Drehrate erfolgen.

Treten trotz aller Korrekturen Abweichungen zwischen den gemessenen und berechneten Werten der Drehrate, Querbeschleunigung oder Lenkwinkels auf, so wird die außergewöhnliche Fahrsituation von einer fahrdynamischen Stabilitätsregelung exakt erkannt. Ist die gefährliche Fahrsituation erfaßt, kann die fahrdynamische Regelung in den weiteren Fahrverlauf eingreifen oder eine Kraftfahrzeugsicherheitsvorrichtung aktiviert werden. Mit diesem Verfahren bzw. einer solchen Vorrichtung kann der Fahrzustand in einer Kurve mit geneigter Fahrbahn ohne zusätzliche Sensoren von sicherheitsrelevanten Vorrichtungen, insbesondere einer fahrdynamischen Stabilitätsregelung genau und exakt bestimmt werden. Ist der genaue Fahrzeugzustand erkannt, so ist auch in ungewöhnlichen und gefährlichen Situationen immer ein exaktes Eingreifen der Regelung oder die Aktivierung eines Sicherheitssystemes gewährleistet.

**Patentansprüche**

1. Verfahren zur Messung des Neigungswinkels ($\alpha$) in seitlich geneigten Kurven bei einem fahrenden Kraftfahrzeug (1), wobei zeitgleich

   - die Querbeschleunigung ($a_M$), die senkrecht zur Fahrzeuggeschwindigkeit und parallel zur Fahrzeugebene steht,
   - die Drehrate ($\Psi_D$), die senkrecht zur Fahrzeuggeschwindigkeit und senkrecht zur Fahrzeugebene steht, und
   - die Fahrzeuggeschwindigkeit ($v$) gemessen wird und
   - durch eine Verknüpfung

   $$(\sin\alpha = \frac{v*|\dot{\Psi}_D|\cdot a_M}{g})$$

   dieser drei gemessenen Faktoren der Neigungswinkel ($\alpha$) in Echtzeit berechnet wird.

2. Vorrichtung zur Durchführung des Verfahrens gemäß dem Anspruch 1, **dadurch gekennzeichnet, daß** die Vorrichtung

   - einen Querbeschleunigungssensor (4) zur Messung der Querbeschleunigung ($a_M$),
   - einen Drehratensensor (5) zur Messung der Drehrate ($\Psi_D$),
   - einen Geschwindigkeitssensor (3) zur Messung der Fahrzeuggeschwindigkeit ($v$) und
   - eine Auswerteeinheit (6) beinhaltet, und
   - die Auswerteeinheit (6) mittels einer Beziehung

   $$(\sin\alpha = \frac{v*|\dot{\Psi}_D|\cdot a_M}{g})$$

   der zeitgleich ermittelten Signale dieser Sensoren den Neigungswinkel ($\alpha$) ermittelt.

3. Vorrichtung gemäß Anspruch 2, **dadurch gekennzeichnet, daß** der Querbeschleunigungssensor (4), der Drehratensensor (5), der Geschwindigkeitssensor (3) und die Auswerteeinheit (6) zumindest teilweise Bestandteil von einer anderen elektronischen Einrichtung im Kraftfahrzeug, insbesondere einer fahrdynamischen Stabilitätsregelung oder einer Kraftfahrzeugsicherheitseinrichtung ist.

4.  Verfahren nach Anspruch 1, **dadurch gekennzeichnet, daß** der berechnete Neigungswinkel ($\alpha$) für Berechnungen in anderen Verfahren, insbesondere in Verfahren zur fahrdynamischen Stabilitätsregelung dient.

5.  Verfahren nach einem der vorangegangenen Ansprüche, **dadurch gekennzeichnet, daß** mit Hilfe eines Zählers (7) in einem festgelegten Takt das Vorhandensein der Fahrbahnneigung überprüft wird und der Zähler (7), jedesmal wenn eine Neigung der Fahrbahn erkannt wird, seinen Wert erhöht.

6.  Verfahren nach einem der vorangegangenen Ansprüche, **dadurch gekennzeichnet, daß** mit Hilfe eines Zählers (7) in einem festgelegten Takt das Vorhandensein der Fahrbahnneigung überprüft wird und der Zähler, jedesmal wenn ein Fehlen der Fahrbahnneigung erkannt wird, seinen Wert erniedrigt.

7.  Verfahren nach Anspruch 5 und 6, **dadurch gekennzeichnet, daß** eine Fahrbahnneigung nur dann an eine fahrzeugdynamische Stabilitätsregelung, eine Kraftfahrzeugsicherheitseinrichtung oder an den Fahrer weitergeleitet wird, wenn im Zähler (7) ein definierter Wertebereich über- oder unterschritten wird.

8.  Verwendung eines Verfahrens gemäß Anspruch 1 für eine fahrdynamische Stabilitätsregelung.

9.  Verwendung eines Verfahrens gemäß Anspruch 1 für ein Kraftfahrzeugsicherheitssystem.

FIG. 1

FIG. 2

10 — MESSUNG VON $\dot\psi_D, a_M, \delta_M, v$

11 — BERECHNUNG VON
$$\dot\psi_{AM} = f(a_M, v)$$
$$\dot\psi_F = f(\delta_M, v)$$

12 — VERGLEICHE $\dot\psi_{DM}, \dot\psi_{AM}, \dot\psi_F$

13 — GILT $\dot\psi_D > \dot\psi_F > \dot\psi_{AM} \vee \dot\psi_D < \dot\psi_F < \dot\psi_{AM}$

14 NEIN — KEINE KURVE MIT GENEIGTER FAHRBAHN

23 — ENDE

JA

15 — BERECHNE $a_K = a_M + g \cdot \sin\alpha$

16 — BERECHNUNG VON $\alpha = \arcsin \dfrac{v \times |\dot\psi_D| - a_M}{g}$

24 — HOLE MESSERGEBNIS (SCHRITT 10) $\dot\psi_D, a_M, v$

$\alpha$

17 — GILT $\dot\psi_D > \dot\psi_F > \dot\psi_{AM} \wedge \dot\psi_D > 0 \wedge a_K > 0$

JA

19 — LINKSKURVE MIT EINER UM $\alpha$ GENEIGTEN FAHRBAHN IST ZWEIFELSFREI ERKANNT

NEIN

18 — GILT $\dot\psi_D < \dot\psi_F < \dot\psi_{AM} \wedge \dot\psi_D < 0 \wedge a_K < 0$

22 NEIN — ZWEIFELSFREI KEINE KURVE MIT GENEIGTER FAHRBAHN

23 — ENDE

JA

20 — RECHTSKURVE MIT EINER UM $\alpha$ GENEIGTEN FAHRBAHN IST ZWEIFELSFREI ERKANNT

21 — ZUR WEITEREN VERARBEITUNG

FIG.3

FIG.4

FIG. 5